Europäisches Patentamt

European Patent Office

Office européen des brevets

(19)

(11)  **EP 1 681 775 A2**

(12)  **EUROPEAN PATENT APPLICATION**

(43) Date of publication:
**19.07.2006  Bulletin 2006/29**

(51) Int Cl.:
*H04B 1/707* (2006.01)

(21) Application number: **06111278.5**

(22) Date of filing: **21.02.2001**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **15.03.2000  US 189680 P**
**26.05.2000  US 207700 P**

(62) Document number(s) of the earlier application(s) in accordance with Art. 76 EPC:
**01911077.4 / 1 264 415**

(71) Applicant: **InterDigital Patent Corporation Wilmington, DE 19801 (US)**

(72) Inventors:
• **Misra, Raj Mani**
**Brooklyn**
**New York**
**NY 11215 (US)**

• **Pan, Jung-Lin**
**Selden,**
**New York**
**NY 11784 (US)**
• **Zeira, Ariela**
**Huntington**
**New York**
**NY 11743 (US)**

(74) Representative: **Engdahl, Stefan**
**Awapatent AB**
**P.O. Box 45086**
**104 30 Stockholm (SE)**

Remarks:
This application was filed on 16 - 03 - 2006 as a divisional application to the application mentioned under INID code 62.

(54)  **Multi-user detection using an adaptive combination of joint detection and successive interference cancellation**

(57)  A time division duplex communication system using code division multiple access transmits a plurality of data signals over a shared spectrum in a time slot. A combined signal is received over the shared spectrum in the time slot. The plurality of data signals are grouped into a plurality of groups. The combined signal is matched filtered based on in part symbol responses associated with the data signals of one of the groups. Data from each data signal in the one group is jointly detected.

FIG. 5

EP 1 681 775 A2

## Description

This application claims priority to U.S. Provisional Patent Application No. 60/189,680, filed on March 15, 2000 and U.S. Provisional Patent Application No. 60/207,700, filed on May 26, 2000.

BACKGROUND

The invention generally relates to wireless communication systems. In particular, the invention relates to joint detection of multiple user signals in a wireless communication system.

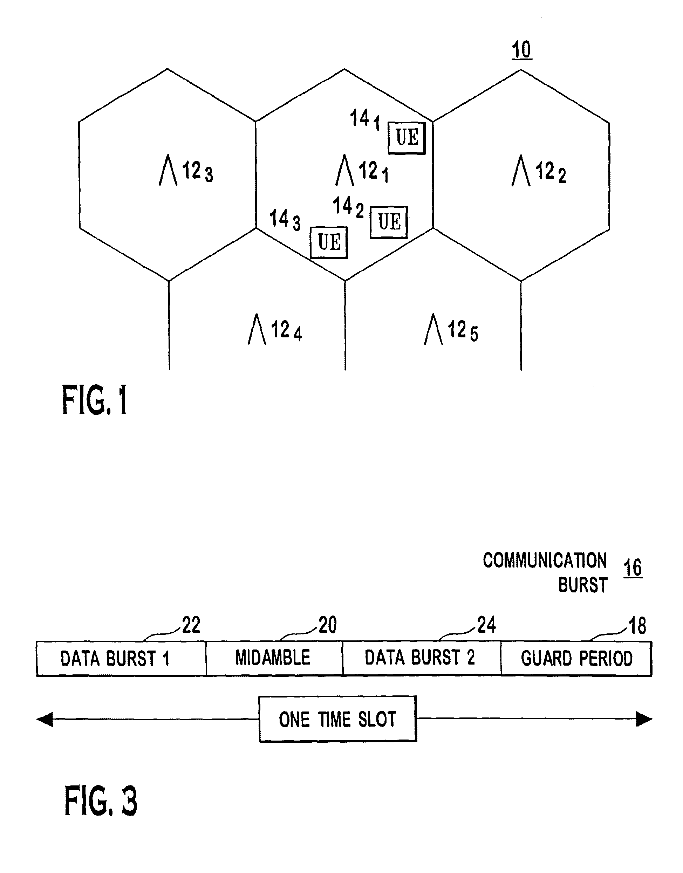

Figure 1 is an illustration of a wireless communication system 10. The communication system 10 has base stations $12_1$ to $12_5$ which communicate with user equipments (UEs) $14_j$ to $14_3$. Each base station 12, has an associated operational area where it communicates with UEs $14_1$ to $14_3$ in its operational area.

In some communication systems, such as code division multiple access (CDMA) and time division duplex using code division multiple access (TDD/CDMA), multiple communications are sent over the same frequency spectrum. These communications are typically differentiated by their chip code sequences. To more efficiently use the frequency spectrum, TDD/CDMA communication systems use repeating frames divided into time slots for communication. A communication sent in such a system will have one or multiple associated chip codes and time slots assigned to it based on the communication's bandwidth.

Since multiple communications may be sent in the same frequency spectrum and at the same time, a receiver in such a system must distinguish between the multiple communications. One approach to detecting such signals is matched filtering. In matched filtering, a communication sent with a single code is detected. Other communications are treated as interference. To detect multiple codes, a respective number of matched filters are used. Another approach is successive interference cancellation (SIC). In SIC, one communication is detected and the contribution of that communication is subtracted from the received signal for use in detecting the next communication.

In some situations, it is desirable to be able to detect multiple communications simultaneously in order to improve performance. Detecting multiple communications simultaneously is referred to as joint detection. Some joint detectors use Cholesky decomposition to perform a minimum mean square error (MMSE) detection and zero-forcing block equalizers (ZF-BLEs). These detectors have a high complexity requiring extensive receiver resources.

Accordingly, it is desirable to have alternate approaches to multi-user detection.

SUMMARY

A time division duplex communication system using code division multiple access transmits a plurality of data signals over a shared spectrum in a time slot. A combined signal is received over the shared spectrum in the time slot. The plurality of data signals are grouped into a plurality of groups. The combined signal is matched filtered based on in part symbol responses associated with the data signals of one of the groups. Data from each data signal in the one group is jointly detected. An interference signal is constructed based on in part the one group detected data. The constructed interference signal is subtracted from the combined signal. Data from the other groups is detected by processing the subtracted signal.

BRIEF DESCRIPTION OF THE DRAWING(S)

Figure 1 is a wireless communication system.

Figure 2 is a simplified transmitter and a receiver using joint detection.

Figure 3 is an illustration of a communication burst.

Figure 4 is a flow chart of adaptive combination of joint detection and successive interference cancellation.

Figure 5 is an illustration of an adaptive combination of joint detection and successive interference cancellation device.

Figures 6-12 are graphs comparing the performance of adaptive combination of joint detection and successive interference cancellation, full joint detection and a RAKE receiver.

DETAILED DESCRIPTION OF THE PREFERRED EMBODIMENT(S)

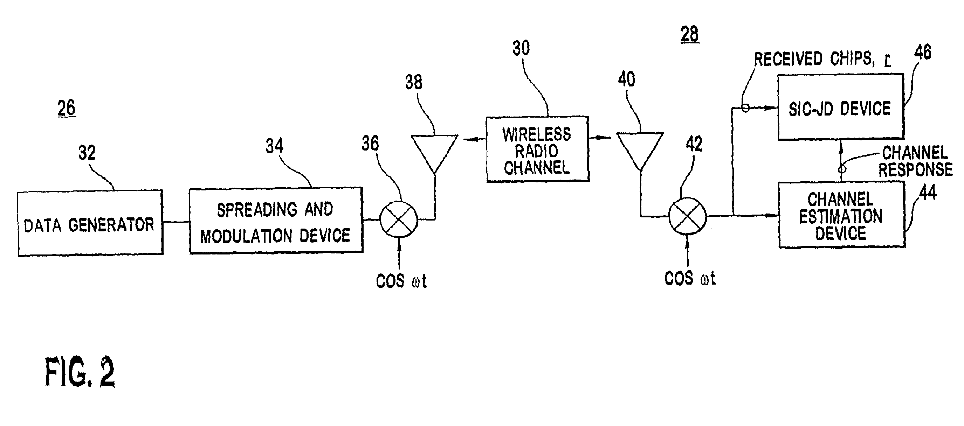

Figure 2 illustrates a simplified transmitter 26 and receiver 28 using an adaptive combination of joint detection (JD) and successive interference cancellation (SIC), "SIC-JD", in a TDD/CDMA communication system. In a typical system, a transmitter 26 is in each UE 14, to $14_3$ and multiple transmitting circuits 26 sending multiple communications are in each base station $12_1$ to $12_5$. A base station $12_1$ will typically require at least one transmitting circuit 26 for each actively communicating UE $14_1$ to $14_3$. The SIC-JD receiver 28 may be at a base station $12_1$, UEs $14_1$ to $14_3$ or both.

The SIC-JD receiver 28 receives communications from multiple transmitters 26 or transmitting circuits 26.

Each transmitter 26 sends data over a wireless radio channel 30. A data generator 32 in the transmitter 26 generates data to be communicated over a reference channel to a receiver 28. Reference data is assigned to one or multiple codes and/or time slots based on the communications bandwidth requirements. A modulation and spreading device 34 spreads the reference data and makes the spread reference data time-multiplexed with a training sequence in the appropriate assigned time slots and codes. The resulting sequence is referred to as a communication burst. The communication burst is modulated by a modulator 36 to radio frequency. An antenna 38 radiates the RF signal through the wireless radio channel 30 to an antenna 40 of the receiver 28. The type of modulation used for the transmitted communication can be any of those known to those skilled in the art, such as direct phase shift keying (DPSK) or quadrature phase shift keying (QPSK).

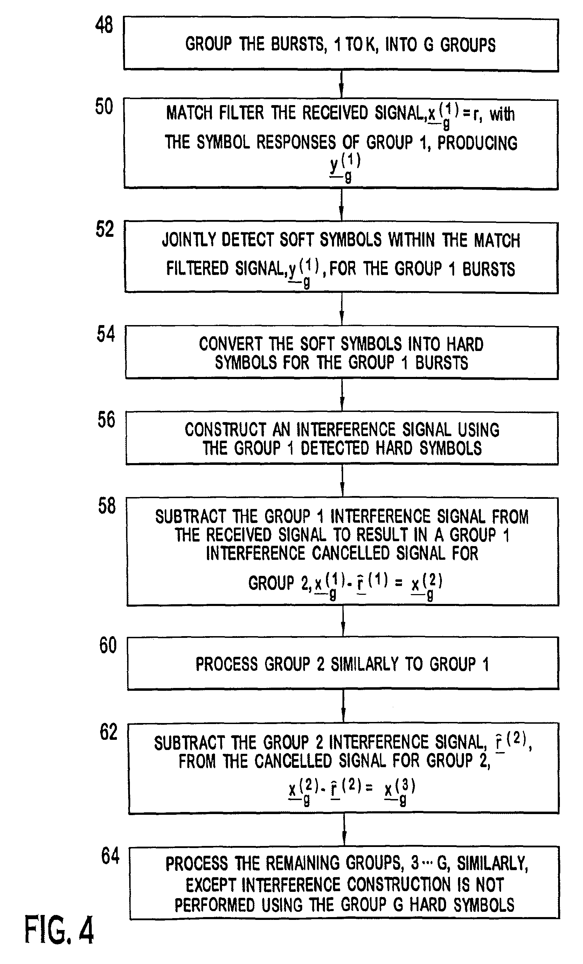

A typical communication burst 16 has a midamble 20, a guard period 18 and two data bursts 22, 24, as shown in Figure 3. The midamble 20 separates the two data bursts 22, 24 and the guard period 18 separates the communication bursts to allow for the difference in arrival times of bursts transmitted from different transmitters. The two data bursts 22, 24 contain the communication burst's data and are typically the same symbol length. The midamble contains a training sequence.

The antenna 40 of the receiver 28 receives various radio frequency signals. The received signals are demodulated by a demodulator 42 to produce a baseband signal. The baseband signal is processed, such as by a channel estimation device 44 and a SIC-JD device 46, in the time slots and with the appropriate codes assigned to the communication bursts of the corresponding transmitters 26. The channel estimation device 44 uses the training sequence component in the baseband signal to provide channel information, such as channel impulse responses. The channel information is used by the SIC-JD device 46 to estimate the transmitted data of the received communication bursts as hard symbols.

The SIC-JD device 46 uses the channel information provided by the channel estimation device 44 and the known spreading codes used by the transmitters 26 to estimate the data of the various received communication bursts. Although SIC-JD is described in conjunction with a TDD/CDMA communication system, the same approach is applicable to other communication systems, such as CDMA.

One approach to SIC-JD in a particular time slot in a TDD/CDMA communication system is illustrated in Figure 4. A number of communication bursts are superimposed on each other in the particular time slot, such as K communication bursts. The K bursts may be from K different transmitters. If certain transmitters are using multiple codes in the particular time slot, the K bursts may be from less than K transmitters.

Each data burst 22, 24 of the communication burst 16 has a predefined number of transmitted symbols, such as $N_S$. Each symbol is transmitted using a predetermined number of chips of the spreading code, which is the spreading factor (SF). In a typical TDD communication system, each base station $12_1$ to $12_5$ has an associated scrambling code mixed with its communicated data. The scrambling code distinguishes the base stations from one another. Typically, the scrambling code does not affect the spreading factor. Although the terms spreading code and factor are used hereafter, for systems using scrambling codes, the spreading code for the following is the combined scrambling and spreading codes. As a result, each data burst 22, 24 has $N_S$ x SF chips. After passing through a channel having an impulse response of W chips, each received burst has a length of SF x $N_S$ + W -1, which is also represented as $N_C$ chips. The code for a $k^{th}$ burst of the K bursts is represented by $C^{(k)}$.

Each $k^{th}$ burst is received at the receiver and can be represented by Equation 1 ,

$$\underline{r}^{(k)} = A^{(k)} \underline{d}^{(k)}, \ k = 1 \cdots K$$

Equation 1

$r^{(k)}$ is the received contribution of the $k^{th}$ burst. $A^{(k)}$ is the combined channel response, being an $N_c$ x $N_s$ matrix. Each $j^{th}$ column in $A^{(k)}$ is a zero-padded version of the symbol response $S^{(k)}$ of the $j^{th}$ element of $d^{(k)}$. The symbol response $S^{(k)}$ is the convolution of the estimated response $\underline{h}^{(k)}$ and spreading code $C^{(k)}$ for the burst. $\underline{d}^{(k)}$ is the unknown data symbols transmitted in the burst. The estimated response for each $k^{th}$ burst, $\underline{h}^{(k)}$, has a length W chips and can be represent by Equation 2.

$$\underline{h}^{(k)} = \gamma^{(k)} \cdot \underline{\tilde{h}}^{(k)}$$

<div align="right">Equation 2</div>

$\gamma^{(k)}$ reflects the transmitter gain and/or path loss. $\tilde{h}^{(k)}$ represents the burst-specific fading channel response or for a group of bursts experiencing a similarly channel, $\tilde{h}^{(g)}$ represents the group-specific channel response. For uplink communications, each $\underline{h}^{(k)}$ as well as each $\gamma^{(k)}$ and $\underline{\tilde{h}}^{(k)}$ are distinct. For the downlink, all of the bursts have the same $\tilde{h}^{(k)}$ but each $\gamma^{(k)}$ is different. If transmit diversity is used in the downlink, each $\gamma^{(k)}$ and $\tilde{h}^{(k)}$ are distinct.

The overall received vector from all K bursts sent over the wireless channel is per Equation 3.

$$\underline{r} = \sum_{i=1}^{K} \underline{r}^{(k)} + \underline{n}$$

<div align="right">Equation 3</div>

$\underline{n}$ is a zero-mean noise vector.

By combining the $A^{(k)}$ for all data bursts into matrix A and all the unknown data for each burst $\underline{d}^{(k)}$ into matrix $\underline{d}$, Equation 1 becomes Equation 4.

$$\underline{r} = A\underline{d} + \underline{n}$$

<div align="right">Equation 4</div>

SIC-JD determines the received power of each $k^{th}$ burst. This determination may be based on apriori knowledge at the receiver 28, burst-specific channel estimation from a burst-specific training sequence, or a bank of matched filters. The K bursts are arranged in descending order based on the determined received power.

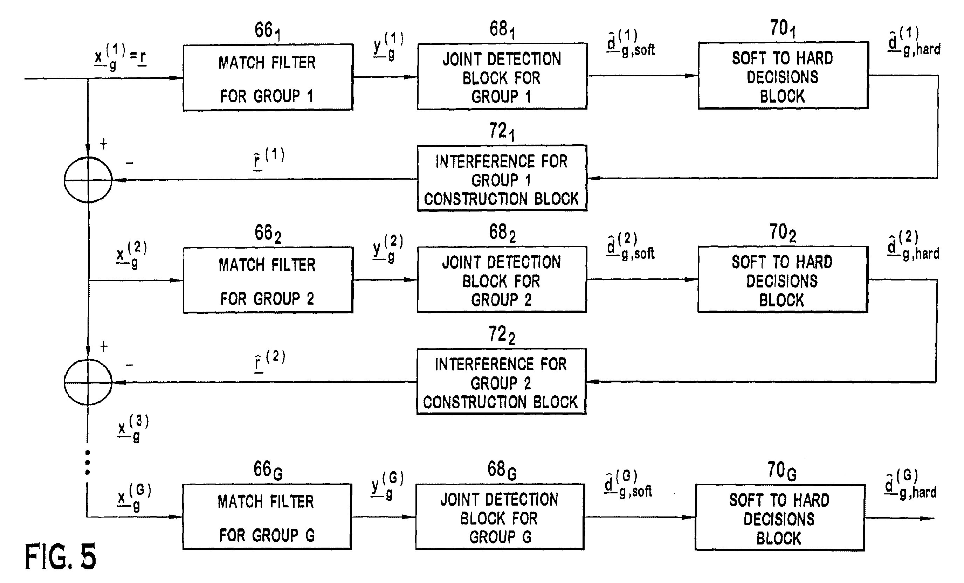

Bursts having roughly the same power level, such as within a certain threshold, are grouped together and are arranged into G groups, 48. The G groups are arranged into descending order by their power, such as from group 1 to G with group 1 having the highest received power. Figure 5 is an illustration of a SIC-JD device 46 performing SIC-JD based on the G groups.

For the group with the highest received power, group 1, the symbol response matrix for only the bursts in group 1, $A_g^{(l)}$, is determined. $A_g^{(1)}$ contains only the symbol responses of the bursts in group 1. The received vector, $\underline{r}$, is modeled for group 1 as $\underline{x}_g^{(l)}$. As a result, Equation 4 becomes Equation 5 for group 1.

$$\underline{x}_g^{(1)} = A_g^{(1)} \underline{d}_g^{(1)} + \underline{n}$$

<div align="right">Equation 5</div>

$\underline{d}_g^{(l)}$ is the data in the bursts of group 1. Equation 5 addresses both the effects of inter symbol interference (ISI) and multiple access interference (MAI). As a result, the effects of the other groups, groups 2 to G, are ignored.

The received vector, $\underline{x}_g^{(1)}$, is matched filtered to the symbol responses of the bursts in group 1 by a group 1 matched filter $66_1$, such as per Equation 6, 50.

$$\underline{y}_g^{(1)} = A_g^{(1)^H} \underline{x}_g^{(1)}$$

<div align="right">Equation 6</div>

$\underline{y}_g^{(1)}$ is the matched filtered result.

A joint detection is performed on group 1 by a group 1 joint detection device $68_1$ to make a soft decision estimate of $\hat{d}_{g,soft}^{(1)}$, using the matched filtered result $\underline{y}_g{}^{(1)}$. One JD approach is to compute the least-squares, zero-forcing, solution of Equation 7.

$$\hat{\underline{d}}_{g,soft}^{(1)} = \left(A_g^{(1)H} A_g^{(1)}\right)^{-1} \underline{y}_g^{(1)}$$

**Equation 7**

$A_g^{(1)I}$ is the hermetian of $A_g^{(1)}$.. Another JD approach is to compute the minimum mean square error solution (MMSE) as per Equation 8.

$$\hat{\underline{d}}_{g,soft}^{(1)} = \left(A_g^{(1)H} A_g^{(1)} + \sigma^2 I\right)^{-1} \underline{y}_g^{(1)}$$

**Equation 8**

I is the Identity matrix and $\sigma^2$ is the standard deviation.

One advantage to performing joint detection on only a group of bursts is that the complexity of analyzing a single group versus all the signals is reduced. Since $A_g^{(1)H}$ and $A_g^{(1)}$ are banded block Toeplitz matrices, the complexity in solving either Equation 7 or 8 is reduced. Additionally, Cholesky decomposition may be employed with a negligible loss in performance. Cholesky decomposition performed on a large number of bursts is extremely complex. However, on a smaller group of users, Cholesky decomposition can be performed at a more reasonable complexity.

The soft decisions, $\hat{d}_{g,soft}^{(1)}$, are converted into hard decisions, $\hat{d}_{g,hard}^{(1)}$, by soft to hard decision block 70, as the received data for group 1, 54. To process the other weaker groups, the multiple access interference caused by group 1 onto the weaker groups is estimated by a group 1 interference construction block $72_1$ using Equation 9,56.

$$\hat{\underline{r}}^{(1)} = A_g^{(1)} \hat{\underline{d}}_{g,hard}^{(1)}$$

**Equation 9**

$\hat{r}^{(i)}$ is the estimated contribution of group 1 to $\underline{r}$.

For the next group 2, the estimated contribution of group 1 is removed from the received vector, $\underline{x}_g{}^{(1)}$, to produce $\underline{x}_g{}^{(2)}$, such as by a subtractor $74_1$, as per Equation 10, 58.

$$\underline{x}_g^{(2)} = \underline{x}_g^{(1)} - \hat{\underline{r}}^{(1)}$$

**Equation 10**

As a result, multiple access interference from group 1 is effectively canceled from the received signal. The next strongest group, group 2, is processed similarly using $\underline{X}_g{}^{(2)}$, with group 2 matched filter $66_2$, group 2 JD block $68_2$, soft

to hard decision block $70_2$ and group 2 interference construction block $72_2$, 60. The constructed group 2 interference, $\tilde{r}^{(2)}$, is subtracted, such as by subtractor $24_2$, from the interference cancelled signal for group 2, $\underline{x}_g^{(2)} - \hat{\tilde{r}}^{(2)} = \underline{x}_g^{(3)}$, , 62. Using this procedure, each group is successively processed until the final group G. Since group G is the last group, the interference construction does not need to be performed. Accordingly, group G is only processed with group G matched filter $66_G$, group G JD block $68_G$ and soft to hard decisions block $70_G$ to recovery the hard symbols, 64.

When SIC-JD is performed at a UE $14_1$, it may not be necessary to process all of the groups. If all of the bursts that the UE $14_1$ is intended to receive are in the highest received power group or in higher received power groups, the UE $14_1$ will only have to process the groups having its bursts. As a result, the processing required at the UE $14_1$ can be further reduced. Reduced processing at the UE $14_1$ results in reduced power consumption and extended battery life.

SIC-JD is less complex than a single-step JD due to the dimension $N_c$ x K $\cdot$ $N_s$ matrix being replaced with G JD stages of dimension $N_c$ x $n_i$ $\cdot$ $N_s$, where i = 1 to G. $n_i$ is the number of bursts in the $i^{th}$ group. The complexity of JD is proportional to the square to cube of the number of bursts being jointly detected.

An advantage of this approach is that a trade-off between computational complexity and performance can be achieved. If all of the bursts are placed in a single group, the solution reduces to a JD problem. The single grouping can be achieved by either forcing all the bursts into one group or using a broad threshold. Alternately, if the groups contain only one signal or only one signal is received, the solution reduces to a SIC-LSE problem. Such a situation could result using a narrow threshold or forcing each burst into its own group, by hard limiting the group size. By selecting the thresholds, an optional tradeoff between performance and complexity can be achieved.

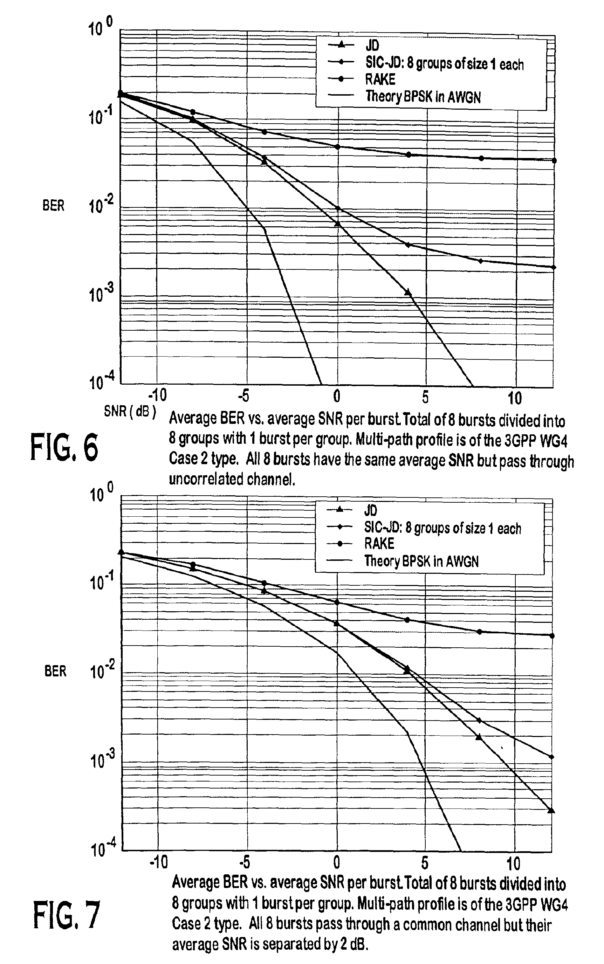

Figures 6 to 12 are simulation results that compare the bit error rate (BER) performance of SIC-JD to full JD and RAKE-like receivers under various multi-path fading channel conditions. The parameters chosen are those of the 3G UTRA TDD CDMA system: SF = 61 and W = 57. Each TDD burst/time-slot is 2560 chips or 667 microseconds long. The bursts carry two data fields with $N_s$ QPSK symbols each, a midamble field and a guard period. Each simulation is run over 1000 timeslots. In all cases the number of bursts, K is chosen to be 8. All receivers are assumed to have exact knowledge of the channel response of each burst, which is used to perfectly rank and group the bursts. The channel response is assumed to be time-invariant over a time-slot, but successive time-slots experience uncorrelated channel responses. No channel coding was applied in the simulation. The JD algorithm jointly detects all K bursts. The RAKE-like receiver was a bank of matched filters, $\underline{\hat{d}}^{(i)} = A^{(i)H} \underline{r}^{(i)}$ , for an $i^{th}$ burst's code. The maximal ratio combiner (MRC) stage is implicit in these filters because they are matched to the entire symbol-response.

The performance was simulated under fading channels with multi-path profiles defined by the ITU channel models, such as the Indoor A, Pedestrian A, Vehicular A models, and the 3GPP UTRA TDD Working Group 4 Case 1, Case 2 and Case 3 models. In Vehicular A and Case 2 channels, the SIC-JD suffered a degradation of up to 1 decibel (dB) as compared to the full JD in the 1% to 10% BER range. For all other channels, the SIC-JD performance was within 0,5 dB of that of the full JD. Since Vehicular A and Case 2 represent the worst-case amongst all cases studied, only the performance plots are shown. Amongst all channels simulated, Vehicular A and Case 2 have the largest delay spread. Vehicular A is a six tap model with relative delays of 0, 310, 710, 1090, 1730 and 2510 nanoseconds and relative average powers of 0, -1, -9, -10, -15 and -20 decibels (dB). Case 2 is a 3 tap model, all with the same average power and with relative delays of 0, 976 and 1200 nanoseconds.

Figures 6 and 7 compare the bit error rate (BER) vs. the chip-level signal to noise ratio (SNR) performance of the SIC-LSE receiver with the full JD and RAKE-like receivers under two multi-path fading channel conditions. The group size is forced to be 1, to form K groups, both, at the transmitter and receiver. The theoretical binary phase shift keying (BPSK) BER in an additive white gaussian noise (AWGN) channel that provides a lower bound to the BER is also shown. The BER is averaged over all bursts. Figure 6 represents the distinct channel case wherein each burst is assumed to pass through an independently fading channel but all channels have the same average power leading to the same average SNR. Thus, in this case, $\underline{\tilde{h}}^{(i)}$, i = 1 $\cdots$ K are distinct while $\gamma^{(i)}$, i = 1 $\cdots$ K are all equal. Such a situation exists in the uplink where the power control compensates for long-term fading and/or path-loss but not for short-term fading. At each time-slot, the bursts were arranged in power based upon the associated $\underline{h}^{(i)}$, i = 1 $\cdots$ K. Figure 7 shows similar plots for the common channel case. All bursts are assumed to pass through the same multi-path channel, i.e., $\underline{\tilde{h}}^{(i)}$, i = 1 $\cdots$ K and are all equal, but with different $\gamma^{(i)}$, i = 1 $\cdots$ K. The $\delta^{(i)}$ are chosen such that neighboring bursts have a power separation of 2 dB when arranged by power level. Such difference in power can exist, for instance, in the downlink where the base station $12_1$ applies different transmit gains to bursts targeted for different UEs $14_1$ to $14_3$. Figures 6 and 7 show that in the range of 1% to 10% bit error rate (BER), the SIC-LSE suffers a degradation of less than 1 dB as compared to the JD. This is often the range of interest for the uncoded BER (raw BER). The RAKE receiver exhibits significant degradation, since it does not optimally handle the ISI. As the power differential between bursts increases, the performance of SIC-LSE improves. Depending upon the channel, a power separation of 1 to 2 dB is sufficient to achieve a performance comparable to that of the full JD.

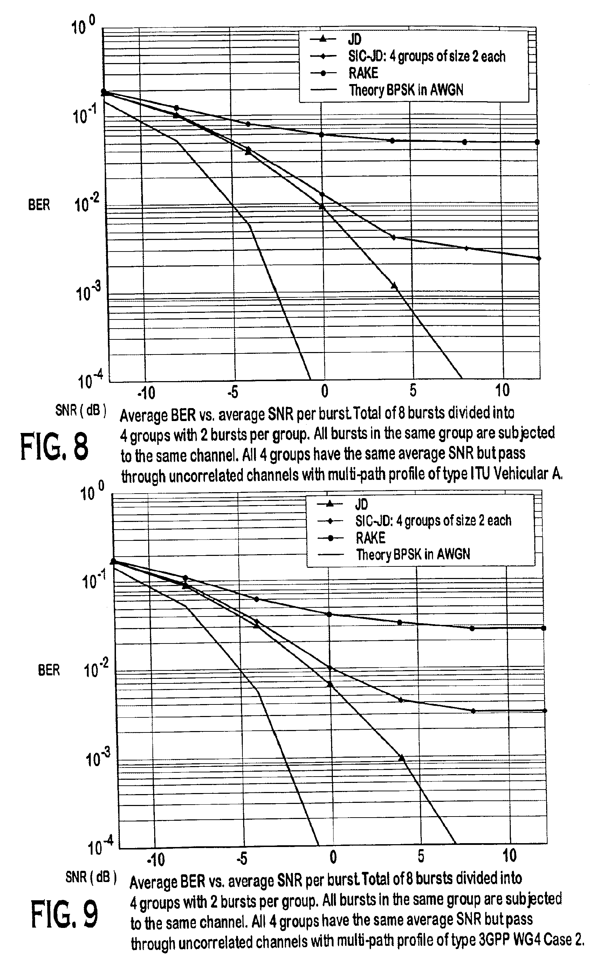

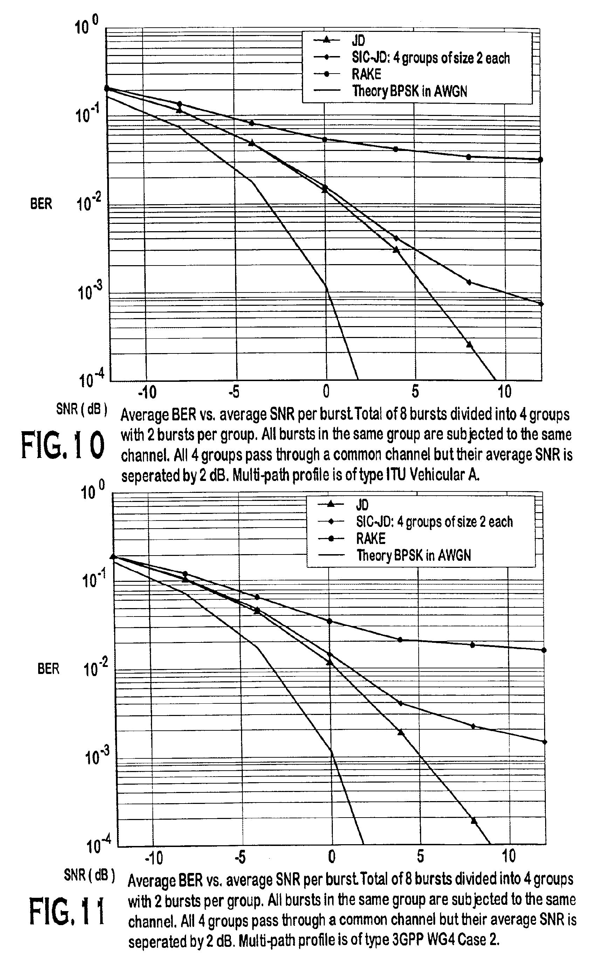

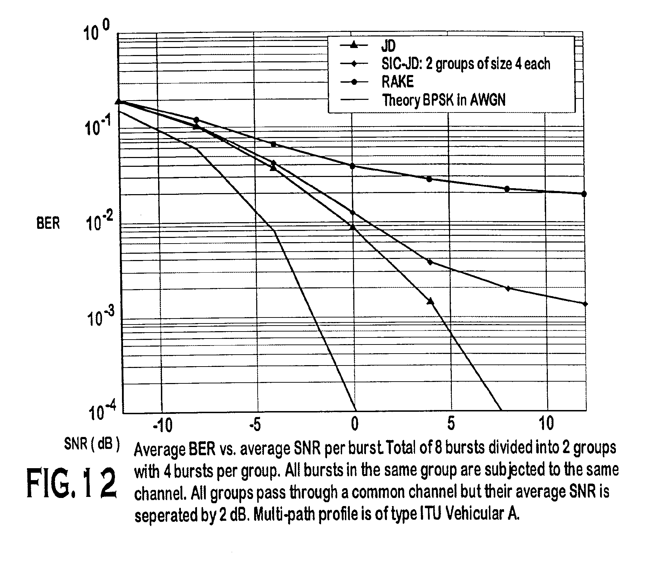

Figures 8, 9,10 and 11 compare the BER vs. SNR performance of the SIC-JD receiver with the full JD and RAKE-like receivers under two multi-path fading channels. The 8 codes are divided into 4 groups of 2 codes each at the transmitter and receiver. The BER is averaged over all bursts. Figures 8 and 9 represent the distinct channel case wherein different groups are assumed to pass through independently fading channels. However, all channels have the same average power leading to the same average SNR. All bursts within the same group are subjected to an identical channel response. In this case, $\tilde{\underline{h}}_g^{(g)}, g = 1 \cdots G$ are all distinct, but the channel responses, $h_g^{(i)}, i = 1, \cdots n_g$, for each burst in the group are equal. $n_g$ is the number of bursts in the g$^{th}$ group. This potentially represents a multi-code scenario on the uplink, where each UE $14_1$ transmits two codes. The SIC-JD receiver 28 groups the multi-codes associated with a single UE $14_1$ into the same group, thus forming 4 groups. Figures 10 and 11 represent the common channel case. All groups are assumed to pass through the same multi-path channel, i.e., $\tilde{\underline{h}}_g^{(i)}, g = 1 \cdots n_g$ are all equal, but with different $\gamma_g$, $g = 1 \cdots G$. The $\gamma_g$ are chosen such that, when arranged according to power, neighboring groups have a power separation of 2 dB. This potentially represents a multi-code scenario on the downlink where the base station $12_1$ transmits 2 codes per UE $14_1$. Figures 10 and 11 show a trend similar to that observed for the SIC-LSE shown in Figures 8 and 9. SIC-JD has a performance comparable (within a dB) to the JD in the region of 1% to 10% BER, which is the operating region of interest for the uncoded BER. Depending upon the channel, a power separation of 1 to 2 dB is sufficient to achieve a performance of SIC-LSE comparable to that of the full JD. As shown, performance improves as the power separation between bursts increases.

Figure 12 is similar to Figure 10, except that there are only two groups with 4 bursts each. As shown in Figure 12, SIC-JD has a performance comparable (within a dB) to JD in the region of 1% to 10% BER.

The complexity of SIC-JD is less than full JD. The reduced complexity stems from the replacement of a single-step JD which is a dimension $N_c \times K \cdot N_s$ with G JD stages of dimension $N_c \times n_i \cdot N_s$, $i = 1 \cdots G$. Since, typically, JD involves a matrix inversion, whose complexity varies as the cube of the number of bursts, the overall complexity of the multi-stage JD can be significantly lower than that of the single-stage full JD. Furthermore, the complexity of the SIC part varies only linearly with the number of bursts, hence it does not offset this complexity advantage significantly. For instance, the complexity of the G-1 stages of interference cancellation can be derived as follows. Since successive column blocks of $A_g^{(1)}$ are shifted versions of the first block and assuming that elements of $\hat{\underline{d}}_{g,hard}^{(i)}$ belong to 1 of 4 QPSK constellation points, the $4 \cdot n_i$ possible vectors can be computed that are needed in computing the product $A_g^{(i)} \hat{\underline{d}}_{g,hard}^{(i)}$. This step requires $4\alpha \cdot (SF + W - 1) \cdot \dfrac{Rate}{10^6} \sum\limits_{i=1}^{G-1} n_i$ million real operations per sec (MROPS). $\alpha = 4$ is the number of real operations per complex multiplication or multiply and accumulate (MAC). *Rate* is the number of times the SIC-JD is performed per second. With these $4 \cdot n_i$ vectors already computed, the computation of $\underline{x}_g^{(i+1)}$ requires $\dfrac{\alpha}{2} \cdot N_s \cdot (SF + W - 1) \cdot \dfrac{Rate}{10^6} \sum\limits_{i=1}^{G-1} n_i$ MROPS. The factor of $\dfrac{\alpha}{2}$ comes from the fact that only complex additions are involved. Hence, only 2 real operations are required for each complex operation. It then follows that the complexity of G - 1 stages of interference cancellation can be expressed by Equation 11.

$$Z = \alpha(SF + W - 1) \cdot \left(4 + \frac{N_s}{2}\right) \cdot \frac{Rate}{10^6} \cdot \sum_{i=1}^{G-1} n_i$$

Equation 11

The complexity of converting soft to hard decisions is negligible.

There are several well-known techniques to solve the matrix inversion of JD. To illustrate the complexity, an approach using a very efficient approximate Cholesky factor algorithm with negligible loss in performance as compared to the exact Cholesky factor algorithm was used. The same algorithm can be employed to solve group-wise JD. The complexity of the full JD and the SIC-JD for the 3GPP UTRA TDD system is shown in Table 1. Table I compares their complexity for various group sizes. It can be seen that as K increases or as the group size decreases the complexity advantage of the SIC-JD over the full JD increases. The complexity for group size 1, of the SIC-LSE, varies linearly with $K$ and is 33% that of the full JD for $K = 16$. Note that maximum number of bursts in the UTRA TDD system is 16. The complexity advantage of the SIC-JD over full JD will be even more pronounced when the exact Cholesky decomposition is employed. Exact Cholesky decomposition's complexity exhibits a stronger dependence on $K$, leading to more savings as the dimension of the JD is reduced via SIC-JD.

Table 1

| Total number of bursts | Complexity of the SIC-JD expressed as a percentage of the complexity of the single-step JD of all $K$ bursts | | | |
|---|---|---|---|---|
| | K / 1 groups of size 1 each (SIC-LSE) | K / 2 groups of size 2 each | K / 4 groups of size 4 each | K / 8 groups of size 8 each |
| 8 | 63% | 67% | 76% | 100% |
| 16 | 33% | 36% | 41% | 57% |

As shown in Table 1, when the number and size of codes is made completely adaptive on an observation interval-by-observation interval basis, the SIC-JD provides savings, on average, over full JD. Since, on average, all bursts do not arrive at the receiver with equal power, depending upon the grouping threshold, the size of the groups will be less then the total number of arriving bursts. In addition, a reduction in peak complexity is also possible if the maximum allowed group size is hard-limited to be less than the maximum possible number of bursts. Such a scheme leads to some degradation in performance when the number of bursts arriving at the receiver with the roughly the same power exceeds the maximum allowed group size. Accordingly, SIC-JD provides a mechanism to trade-off performance with peak complexity or required peak processing power.

**Claims**

1. A method for use in a receiver for receiving a plurality of data signals transmitted over a shared spectrum in a time slot in a time division duplex communication system using code division multiple access, the method comprising:

    receiving a combined signal over the shared spectrum in the time slot;
    estimating a received power level for each data signal;
    selectively grouping data signals of the plurality of data signals into groups where the received power level of the data signals is within a certain threshold, the certain threshold is adjusted to achieve a desired bit error rate at the receiver;
    separately detecting data within each group for that group's data signals; and
    estimating the received power level for each data signal is based on in part apriori knowledge at the receiver.

2. The method of claim 1, wherein the estimating the received power level for each data signal is based on in part a power level of a training sequence associated with each data signal.

3. The method of claim 1, wherein the estimating the received power level for each data signal is performed using a bank of matched filters, each matched filter matched to a code of a respective one of the data signals.

4. The method of claim 1, wherein the certain threshold power level is two decibel.

5. The method of claim 1, wherein the certain threshold power level is one decibel.

6. The method of claim 1, wherein the bit error rate is in a range of 1% to 10%.

7. The method of claim 1, further comprising forcing all of the data signals into a single group to override the step of selectively grouping.

8. The method of claim 1 further comprising forcibly grouping each data signal into its own group to override the step of selectively grouping.

9. A receiver for receiving a plurality of data signals transmitted over a shared spectrum in a time slot in a time division duplex communication system using code division multiple access, the receiver being arranged for:

receiving a combined signal over the shared spectrum in the time slot;
estimating a received power level for each data signal;
selectively grouping data signals of the plurality of data signals into groups where the received power level of the data signals is within a certain threshold, the certain threshold is adjusted to achieve a desired bit error rate at the receiver;
separately detecting data within each group for that group's data signals; and
estimating the received power level for each data signal is based on in part a priori knowledge at the receiver.

10. The receiver of claim 9, further arranged for estimating the received power level for each data signal is based on in part a power level of a training sequence associated with each data signal.

11. The receiver of claim 9, further arranged for estimating the received power level for each data signal by using a bank of matched filters, each matched filter matched to a code of a respective one of the data signals.

12. The receiver of claim 9, wherein the certain threshold power level is two decibel.

13. The receiver of claim 9, wherein the certain threshold power level is one decibel.

14. The receiver of claim 9, wherein the bit error rate is in a range of 1% to 10%.

15. The receiver of claim 9, further arranged for forcing all of the data signals into a single group to override the step of selectively grouping.

16. The receiver of claim 9, further arranged for forcibly grouping each data signal into its own group to override the step of selectively grouping.

17. A user equipment comprising a receiver according to any one of claims 9-16.

18. A base station comprising a receiver according to any one of claims 9-16.

19. A method for use in receiving a plurality of data signals transmitted over a shared spectrum in a time slot in a time division duplex communication system using code division multiple access, the method comprising:

receiving a combined signal over the shared spectrum in the time slot;
grouping the plurality of data signals into a plurality of groups;
match filtering the combined signal based on in part symbol responses associated with the data signals of one of the groups;
jointly detecting data from each data signal in the one group;
constructing an interference signal based on in part the one group detected data;
subtracting the constructed interference signal from the combined signal; and
determining data from a group other than the one group by processing the subtracted signal.

20. The method of claim 19 wherein the jointly detecting is performed using least squares estimation.

21. The method of claim 19 wherein the jointly detecting is performed using minimum mean square error estimation.

22. A method for use in receiving a plurality of data signals transmitted over a shared spectrum in a time slot in a time division duplex communication system using code division multiple access, the method comprising:

(a) receiving a combined signal as an input signal over the shared spectrum in the time slot;
(b) grouping the plurality of data signals into a plurality of groups, at least one of the groups having a plurality of data signals;
(c) match filtering the input signal based on in part symbol responses associated with each data signal of a first group of the groups;

(d) jointly detecting data from each data signal in the first group;

(e) constructing an interference signal based on in part the first group detected data;

(f) subtracting the constructed interference signal from the input signal as an input signal for subsequent processing;

(g) match filtering the subtracted signal based on in part symbol responses associated with the data signal of a subsequent group of the groups;

(h) jointly detecting data from each data signal in the subsequent group; and

(i) successively repeating steps (e) through (h) for remaining groups of the plurality of groups where, for each remaining group, the subsequent group acts as the first group for that remaining group and that remaining group acts as the subsequent group.

23. A method for use in a receiver for receiving a plurality of data signals transmitted over a shared spectrum in a time slot in a time division duplex communication system using code division multiple access, the method comprising:

receiving a combined signal over the shared spectrum in the time slot;

estimating a received power level for each data signal;

selectively grouping data signals of the plurality of data signals based on in part the received power level of the data signals into at least one group; and

separately detecting data within each group for that group's data signals.

24. The method of claim 23 wherein the estimating the received power level for each data signal is based on in part apriori knowledge at the receiver.

25. The method of claim 23 wherein the estimating the received power level for each data signal is based on in part a power level of a training sequence associated with each data signal.

26. The method of claim 23 wherein the estimating the received power level for each data signal is performed using a bank of matched filters, each matched filter matched to a code of a respective one of the data signals.

27. The method of claim 23 wherein the selectively grouping data signals groups data signals within a certain threshold power level into a group.

28. The method of claim 27 wherein the certain threshold power level is one decibel.

29. The method of claim 27 wherein the certain threshold is adjusted to achieve a desired bit error rate at the receiver.

30. The method of claim 23 further comprising forcing all of the data signals into a single group to override the step of selectively grouping.

31. The method of claim 23 further comprising forcibly grouping each data signal into its own group to override the step of selectively grouping.

32. A receiver for use in a time division duplex communication system using code division multiple access, the system communicating using multiple communication bursts in a time slot, the receiver comprising:

an antenna for receiving radio frequency signals including the multiple communication bursts,

a demodulator for demodulating radio frequency signals to produce a baseband signal;

a channel estimation device for estimating a channel response for the bursts;

a successive interference cancellation joint detection (SIC-JD) device comprising:

a first joint detection block for detecting data within the baseband signal for a first group of bursts of the multiple bursts;

a first interference construction block for constructing an estimate of interference of the first group bursts;

a subtractor for subtracting the first group interference from the baseband signal; and

a second joint detection block for detecting data within the subtracted signal for a second group of bursts of the multiple bursts.

**33.** The receiver of claim 32 wherein the SIC.JD device further comprises:

a plurality of additional joint detection blocks for detecting data for additional groups of bursts of the multiple bursts.

**34.** The receiver of claim 32 wherein the SIC-JD device further comprises:

a first matched filter for processing the baseband signal to match symbol responses of the data signals in the first group; and
a second matched filter for processing the subtracted signal to match symbol responses of the data signals in the second group.

**35.** The receiver of claim 32 wherein an output of the first and second joint detection blocks are soft symbols, the SIC-JD device further comprising a first and second soft to hard decision block for converting the first and second joint detection block outputs into hard symbols.

**36.** A device for use in a receiver of a time division duplex communication system using code division multiple access, the system communicating using multiple communication bursts in a time slot, the device comprising:

an input configured to receive a baseband signal associated with received bursts within a time slot;
a first joint detection block for detecting data within the baseband signal for a first group of bursts of the received bursts;
a first interference construction block for constructing an estimate of interference of the first group bursts;
a subtractor for subtracting the first group interference from the baseband signal; and
a second joint detection block for detecting data within the subtracted signal for a second group of bursts of the received bursts.

**37.** The device of claim 3'6 further comprising additional joint detection blocks for detecting data for additional groups of bursts of the multiple bursts.

**38.** The device of claim 3 6 further comprising:

a first matched filter for processing the baseband signal to match symbol responses of the received bursts of the first group; and
a second matched filter for processing the subtracted signal to match symbol responses of the received bursts of the second group.

**39.** The device of claim 3 6 wherein an output of the first and second joint detection blocks are soft symbols, the device further comprising a first and second soft to hard decision block converting the first and second joint detection block outputs into hard symbols.

10

$14_1$ [UE]

$\wedge$ $12_3$        $\wedge$ $12_1$        $\wedge$ $12_2$

$14_2$ [UE]

$14_3$

[UE]

$\wedge$ $12_4$        $\wedge$ $12_5$

## FIG. 1

COMMUNICATION 16
BURST

| 22 | 20 | 24 | 18 |
|---|---|---|---|
| DATA BURST 1 | MIDAMBLE | DATA BURST 2 | GUARD PERIOD |

←     ONE TIME SLOT     →

## FIG. 3

FIG. 2

**48** GROUP THE BURSTS, 1 TO K, INTO G GROUPS

**50** MATCH FILTER THE RECEIVED SIGNAL, $\underline{x}_g^{(1)} = r$, with THE SYMBOL RESPONSES OF GROUP 1, PRODUCING $\underline{y}_g^{(1)}$

**52** JOINTLY DETECT SOFT SYMBOLS WITHIN THE MATCH FILTERED SIGNAL, $\underline{y}_g^{(1)}$, FOR THE GROUP 1 BURSTS

**54** CONVERT THE SOFT SYMBOLS INTO HARD SYMBOLS FOR THE GROUP 1 BURSTS

**56** CONSTRUCT AN INTERFERENCE SIGNAL USING THE GROUP 1 DETECTED HARD SYMBOLS

**58** SUBTRACT THE GROUP 1 INTERFERENCE SIGNAL FROM THE RECEIVED SIGNAL TO RESULT IN A GROUP 1 INTERFERENCE CANCELLED SIGNAL FOR

GROUP 2, $\underline{x}_g^{(1)} - \underline{\hat{r}}^{(1)} = \underline{x}_g^{(2)}$

**60** PROCESS GROUP 2 SIMILARLY TO GROUP 1

**62** SUBTRACT THE GROUP 2 INTERFERENCE SIGNAL, $\underline{\hat{r}}^{(2)}$, FROM THE CANCELLED SIGNAL FOR GROUP 2,

$$\underline{x}_g^{(2)} - \underline{\hat{r}}^{(2)} = \underline{x}_g^{(3)}$$

**64** PROCESS THE REMAINING GROUPS, 3 ··· G, SIMILARLY, EXCEPT INTERFERENCE CONSTRUCTION IS NOT PERFORMED USING THE GROUP G HARD SYMBOLS

## FIG. 4

FIG. 5

**FIG. 6** Average BER vs. average SNR per burst. Total of 8 bursts divided into 8 groups with 1 burst per group. Multi-path profile is of the 3GPP WG4 Case 2 type. All 8 bursts have the same average SNR but pass through uncorrelated channel.

**FIG. 7** Average BER vs. average SNR per burst. Total of 8 bursts divided into 8 groups with 1 burst per group. Multi-path profile is of the 3GPP WG4 Case 2 type. All 8 bursts pass through a common channel but their average SNR is separated by 2 dB.

FIG. 8    Average BER vs. average SNR per burst. Total of 8 bursts divided into 4 groups with 2 bursts per group. All bursts in the same group are subjected to the same channel. All 4 groups have the same average SNR but pass through uncorrelated channels with multi-path profile of type ITU Vehicular A.

FIG. 9    Average BER vs. average SNR per burst. Total of 8 bursts divided into 4 groups with 2 bursts per group. All bursts in the same group are subjected to the same channel. All 4 groups have the same average SNR but pass through uncorrelated channels with multi-path profile of type 3GPP WG4 Case 2.

FIG. 10 Average BER vs. average SNR per burst. Total of 8 bursts divided into 4 groups with 2 bursts per group. All bursts in the same group are subjected to the same channel. All 4 groups pass through a common channel but their average SNR is seperated by 2 dB. Multi-path profile is of type ITU Vehicular A.

FIG. 11 Average BER vs. average SNR per burst. Total of 8 bursts divided into 4 groups with 2 bursts per group. All bursts in the same group are subjected to the same channel. All 4 groups pass through a common channel but their average SNR is seperated by 2 dB. Multi-path profile is of type 3GPP WG4 Case 2.

**FIG. 1 2** Average BER vs. average SNR per burst. Total of 8 bursts divided into 2 groups with 4 bursts per group. All bursts in the same group are subjected to the same channel. All groups pass through a common channel but their average SNR is seperated by 2 dB. Multi-path profile is of type ITU Vehicular A.